# EUROPÄISCHE PATENTSCHRIFT

(11) **EP 2 801 462 B1**
(45) Veröffentlichungstag und Bekanntmachung des Hinweises auf die Patenterteilung: **21.06.2017**
(21) Anmeldenummer: 14161261.4
(22) Anmeldetag: 24.03.2014
(51) Int. Cl.: B29B 7/76, B01F 15/02, B67D 7/64

(54) **Verfahren und Vorrichtung zur gesteuerten Entnahme von flüssigen Materialien aus mehreren Vorlagebehältern**
Method and device for the controlled removal of liquid materials from several containers
Procédé et dispositif de prélèvement commandé de matériaux liquides à partir de plusieurs réservoirs collecteurs

(30) Priorität: 07.05.2013 AT 5006413 U
(43) Veröffentlichungstag der Anmeldung: 12.11.2014
(73) Patentinhaber: ELAST Kunststoffverarbeitungs-GmbH & Co. KG, 4730 Heiligenberg (AT)
(72) Erfinder: Manigatter, Kurt, 4071 Alkoven (AT); Fattinger, Paul, 4730 Heiligenberg (AT); Adlesgruber, Karl, 4511 Allhaming (AT); Reslhuber, Christian, 4491 Niederneukirchen (AT)
(74) Vertreter: Staudt, Armin Walter

(56) Entgegenhaltungen:
- EP-A1- 1 331 072
- EP-A1- 2 511 228
- WO-A2-2009/140776
- AT-A4- 512 536
- DE-A1- 19 611 339
- DE-A1-102004 030 654
- DE-U1-202011 108 222
- DE-U1-202014 100 750
- US-A- 4 312 463

## Beschreibung

### Technischer Hintergrund

Die vorliegende Erfindung betrifft ein Verfahren für die Steuerung einer Vorrichtung zur Entnahme von flüssigen Materialien aus mindestens zwei Vorlagebehältern und Zuführung dieser Substanzen zu einer Mischeinrichtung, wobei eine Folgeplatte auf der Flüssigkeitsoberfläche aufliegt und das Material aus jeweils einem der Vorlagebehälter über eine Schöpfkolbenpumpe, welche von einem Antriebsaggregat angetrieben wird, entnommen und der Mischeinrichtung zugeführt wird, wobei die Menge des entnommenen Materials pro Zeiteinheit über die Taktung der Schöpfkolbenpumpe erfolgt.

Weiterhin betrifft die Erfindung eine Vorrichtung zur vollständigen Leerung von flüssiges Material enthaltenden Vorlagebehältern und Zuführung dieser Materialien an eine Mischeinrichtung für Einrichtungen von Spritzgussmaschinen, bestehend aus einem Gestell, einer Standplatte für die Aufnahme der Vorlagebehälter, einer Haltevorrichtung für Folgeplatten und Schöpfkolbenpumpen, welche von Antriebsaggregaten angetrieben werden.

### Stand der Technik

Ein derartiges Verfahren und eine Vorrichtung zur gesteuerten Entnahme von flüssigen Materialien aus mehreren Vorlagebehältern und Zuführung dieser Substanzen zu einem Mischaggregat sind aus der EP 1 331 072 A1 bekannt. Die Erfindung stellt eine Weiterentwicklung davon dar.

Derartige Vorrichtungen werden eingesetzt, um Kunststoffspritzgussmassen, welche unmittelbar vor ihrer Zuführung zur Formeinrichtung miteinander vermischt werden im gewünschten Mischungsverhältnis zusammen zu setzen. So setzen sich etwa Silikonspritzgussteile aus zwei unterschiedlichen Komponenten zusammen, wobei die Komponenten so aufeinander abgestimmt sind, dass ihr optimales Mischungsverhältnis etwa 50 : 50 entspricht, wobei Abweichungen von +/- 5% praktisch keinen Einfluss auf die Qualität des Endproduktes haben.

Die Vorlagebehälter sind unmittelbar nebeneinander angeordnet. Die Vorlagematerialien sind vom Hersteller jeweils aufeinander abgestimmt. Es ist daher notwendig, immer zueinander gehörige Vorlagebehälter gleichzeitig zu betreiben. Sobald ein Vorlagebehälter entleert ist, müssen daher beide Vorlagebehälter ausgewechselt werden. Die derzeit üblichen Vorlagebehälter weisen Fassungsvolumen von 20 oder 200 Liter auf. Dabei wird von den Anwendern wegen der geringeren Richtzeit, welche insbesondere für die Reinigung aufgewendet werden muß, den 200 Liter Gebinden oft der Vorzug gegeben.

Auf jeden Behälter wird eine sogenannte Folgeplatte aufgesetzt, welche eine Ventilöffnung aufweist, wobei dieses Ventil bei der Berührung der Folgeplatte mit der Substanz öffnet und vorhandene Luft im Behälter entweichen läßt. Dieser Vorgang kann durch anlegen eines vorbestimmten Druckes auf die Folgeplatte unterstützt werden. Sobald die Entlüftung abgeschlossen ist, wird das Ventil geschlossen. Anschließend wird eine von einer Antriebseinheit angetriebene Schöpfkolbenpumpe in das Material eingetaucht. Über den Eintauchtakt wird die Entnahmemenge der flüssigen Substanz gesteuert. Die Schöpfkolbenpumpe leitet das entnommene Material einem Mischkanal zu, in welchem die Substanz mit einer weiteren flüssigen Komponente vermengt wird.

Aus der WO 2009/140776 A2 ist eine Vorrichtung zur Entnahme von flüssigen Materialien aus zwei Vorlagebehältern bekannt, bei der für jedes der Materialen eine Schöpfkolbenpumpe vorgesehen ist. Zur Festlegung der Menge des geförderten Materials pro Zeiteinheit verfügt jede der Schöpfkolbenpumpen über ein Dosierventil und eine Hubmesseinheit. Mittels der Hubmesseinheit wird der effektive Füllgrad des jeweiligen Vorlagebehälters ermittelt und in Abhängigkeit davon wird mittels eines Steuergliedes das Dosierventil angesteuert, dessen Vorlagebehälter den vergleichsweise geringeren Füllgrad hat.

Um bei einem Dosiersystem mit zwei Vorlagenbehältern Abweichungen in den jeweils geförderten Materialmengen zu vermindern, die durch unterschiedliche Viskositäten der einzelnen Materialien bedingt sind, ist bei dem Dosiersystem gemäß der DE 20 2011 108 222 U1 jeder der Vorlagenbehälter mit einer Fördereinrichtung ausgestattet, bei der eine elektrische Pumpe auf einer Folgeplatte angeordnet ist. Zur Erfassung der Füllhöhe jedes Vorlagenbehälters sind Wegsensoren vorgesehen, die mit einer Steuer- und Regeleinrichtung verbunden sind. Die Regelung ist so eingerichtet ist, dass eine simultane Ausbringung der Materialien bewirkt wird. Ergänzend wird noch auf die EP 2511228 A1 hingewiesen, die eine Entnahmevorrichtung zum Entnehmen von fluidem Material aus zumindest einem Materialbehälter betrifft, um dieses einer Verarbeitungseinheit zuzuführen, wobei die Entnahmevorrichtung eine dem jeweiligen Materialbehälter zugeordnete Folgeplatte aufweist sowie zumindest eine dem Materialbehälter zugeordnete Förderpumpe zur Förderung aus dem Materialbehälter, wobei eine Steuereinheit zur Steuerung der mittels der Förderpumpe in einem bestimmten Zeitintervall aus dem Materialbehälter geförderten Materialmenge vorgesehen ist. Die Entnahmevorrichtung weist dabei eine Einrichtung zur Ermittlung der Füllstandshöhe des Materials in dem Materialbehälter und eine Einrichtung zur Ermittlung des Füllgewichts des Materialbehälters auf, mit einer Recheneinheit, welche aus den ermittelten Werten von Füllstandshöhe und Füllgewicht des Materialbehälters, bei bekanntem oder ermitteltem Behälterquerschnitt, einen Dichte-Istwert der Dichte des vorliegenden Materials ermittelt. Ferner ist eine Eingabeeinrichtung zur Eingabe eines Dichte-Vorgabewertes vorgesehen. Mittels der Steuereinheit ist die Fördergeschwindigkeit, mit der das Material mittels der Förderpumpe aus dem Materialbehälter gefördert wird, in Abhängigkeit von dem Dichte-Vorgabewert des Materials steuerbar.

### Technische Aufgabenstellung

Vorrichtungen, welche das geforderte Mischungsverhältnis von 50 : 50 bewirken sollen, berücksichtigen häufig nicht, dass das Vorlagematerial aufgrund unterschiedlicher Viskositäten in geringfügig unterschiedlichen Mengen von den Schöpfkolbenpumpen gefördert wird. Dadurch kommt es zu einer ungleichmäßigen Entleerung der beiden Vorlagebehälter.

Als Folge bleibt in einem der Vorlagebehälter eine Restmenge, welche bis zu 10% des Füllvolumens ausmachen kann. Bei einem Füllvolumen von 200 Liter verbleiben somit bis zu 20 Liter Restmenge, welche nicht mehr verwendet werden können und somit der Sondermüllentsorgung zugeführt werden müssen. Neben dem enormen ökologischen Problem bedeutet diese Restmengenentsorgung für den Betreiber der Anlage auch einen erheblichen finanziellen Aufwand. Ein weiterer Nachteil solcher Anlagen besteht darin, dass sie keine Rücksicht auf eventuell unterschiedliche Füllvolumina der Vorlagebehälter nehmen können.

Für die Qualität des Endproduktes ist eine exakte Einhaltung der 50:50 Fördermenge nicht unbedingt erforderlich. Geringe Abweichungen von dieser Herstellervorgabe sind ohne Qualitätseinbußen beim Endprodukt durchaus möglich und tolerierbar. Viel wesentlicher ist es, keine Restmengen im Vorlagebehälter hinnehmen zu müssen. Da die Vorlagebehälter jedoch bei den Füllhöhen bis zu etwa 8 cm unterschiedlich gefüllt sein können, was bei einem Füllvolumen von 200 Liter einer Menge von etwa 15 kg entspricht, können auch bei einer exakten 50:50-Steuerung Restmengen anfallen, welcher der Sondermüllentsorgung zugeführt werden müssen.

Die vorliegende Erfindung stellt sich daher die Aufgabe, ein Verfahren für die Steuerung einer Vorrichtung der eingangs genannten Art so weiterzubilden, dass die nahezu restlose Entleerung der Vorlagebehälter erreicht wird.

### Allgemeine Beschreibung der Erfindung

Hinsichtlich des Verfahrens wird diese Aufgabe ausgehend von einem Verfahren der eingangs genannten Gattung erfindungsgemäß nach Anspruch 1 dadurch gelöst, dass mittels Sensoren, ausgeführt als linearer Messaufnehmer, und eines damit korrespondierenden kontaktlosen Mitnehmers die Lagedifferenz der beiden Folgeplatten zueinander laufend ermittelt wird und das Ergebnis der Lagedifferenz an die Steuerung der beiden Schöpfkolbenpumpen weiter geleitet wird und dass mittels jeweils einer Waage die Gewichte der beiden Vorlagebehälter bestimmt und an die Steuerung der beiden Schöpfkolbenpumpen weiter geleitet wird, wobei die Gewichtsdifferenz der vollen Vorlagebehälter unter Berücksichtigung des bekannten RAM-Druckes, mit dem die Folgeplatten auf die Materialien gepresst werden, gemessen wird, und wobei die Gewichtsdifferenz von der Steuerung für die Ermittlung der Impulsfrequenzen der Schöpfkolbenpumpen berücksichtigt wird, und dass die Steuerung die Taktung der Schöpfkolbenpumpen bis zur nahezu vollständigen Entleerung der Vorlagebehälter so aufeinander abstimmt, dass die gemessene Lage- und Gewichtsdifferenz während der Entleerung der Vorlagebehälter gegen Null ausgeglichen wird.

Eine Vorrichtung, welche nach diesem Verfahren arbeitet, weist die in Anspruch 4 angegebenen Merkmale auf. Vorteilhafte Weiterentwicklungen der Erfindung sind Gegenstand der abhängigen Ansprüche.

Beide Vorlagebehälter werden zeitgleich gewechselt. Beim Start wird nach der Entlüftung mittels Sensoren die Höhenlagedifferenz der Folgeplatten zueinander ermittelt oder die Gewichtsdifferenz der vollen Vorlagebehälter unter Berücksichtigung des bekannten RAM-Druckes, mit dem die Folgeplatten auf die Materialien gepresst werden, gemessen und die Differenzwerte von der Steuerung für die Ermittlung der Impulsfrequenzen der Schöpfkolbenpumpen berücksichtigt. Die Steuerung errechnet das optimale Mischungsverhältnis, welches innerhalb vorgegebener Toleranzgrenzen liegen muss mit dem Ziel der nahezu vollständigen Materialentnahme aus den Vorlagebehältern. Dieses optimale Mischungsverhältnis wird durch die Ansteuerung der einzelnen Schöpfkolbenpumpen mit unterschiedlichen Impulsfrequenzen erzielt.

Aufgrund der unterschiedlichen Komprimierbarkeit der Vorlagematerialien kommt es jedoch im Laufe der Entleerung der Vorlagebehälter wieder zu einer Zunahme der Differenzwerte. Diese Abweichungen werden entweder über einen Messaufnehmer und einen mit dem Messaufnehmer korrespondierenden Mitnehmer oder über Waagen unterhalb der Vorlagebehälter erkannt und an die Steuerung weitergegeben, wobei die Steuerung diese Abweichungen bei der Berechnung der Impulsfrequenz laufend berücksichtigt.

Mit dem erfindungsgemäßen Verfahren und der danach betriebenen Vorrichtung wird es auch möglich, Vorlagematerialien miteinander zu mischen, deren Mischungsverhältnis nicht 1:1 beträgt, sondern etwa auch bei 1:3 liegen kann. Solche Änderungen bei den Vorlagematerialien sind mit der erfindungsgemäßen Vorrichtung sofort realisierbar, ohne dass Umbauten erforderlich werden. Es ist lediglich nötig, ein anderes Steuerungsprogramm zu fahren.

### Ausführungsbeispiel

Die erfindungsgemäße Vorrichtung wird nachfolgend anhand eines Ausführungsbeispiels und einer Zeichnung näher erläutert. Dabei zeigt im Einzelnen:
**Fig. 1** eine Seitenansicht der erfindungsgemäßen Vorrichtung,
**Fig. 2** eine weitere, um 90 Grad gedrehte Seitenansicht derselben Vorrichtung,
**Fig. 3** eine Aufsicht derselben Vorrichtung, und
**Fig. 4** in einem schematischen Detailausschnitt die Aufhängungen A und B der beiden Folgeplatten.

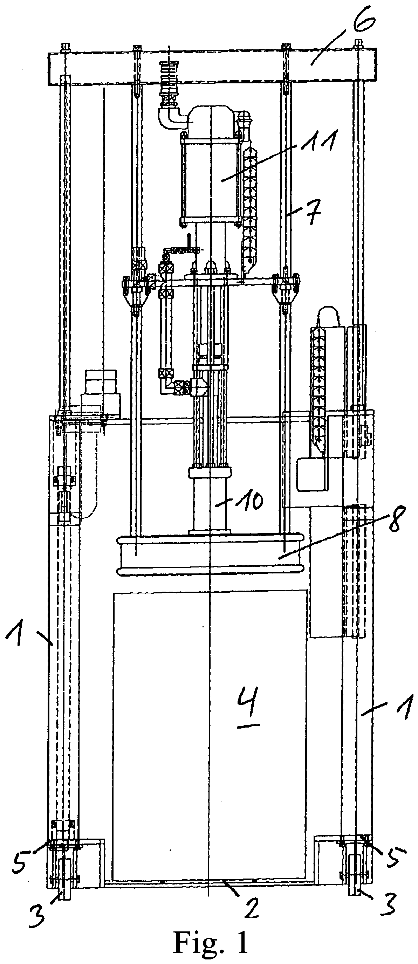

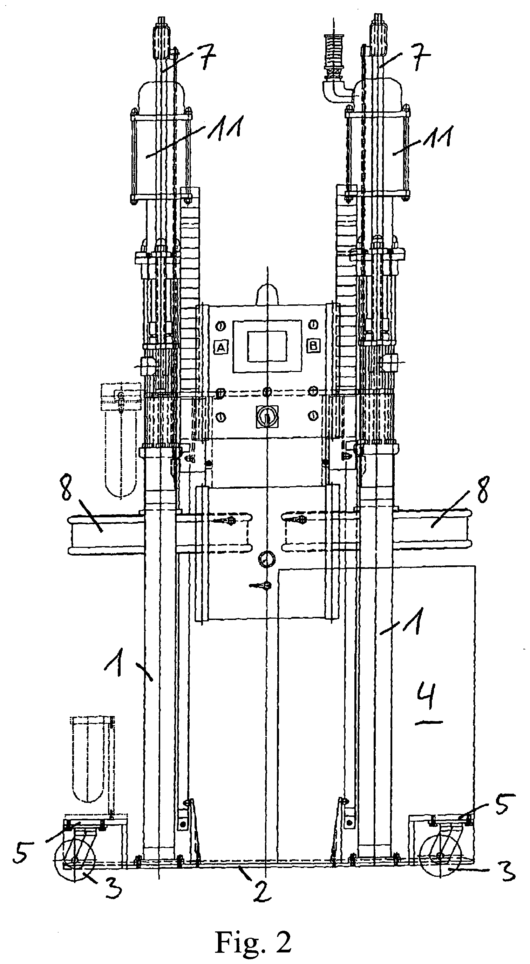

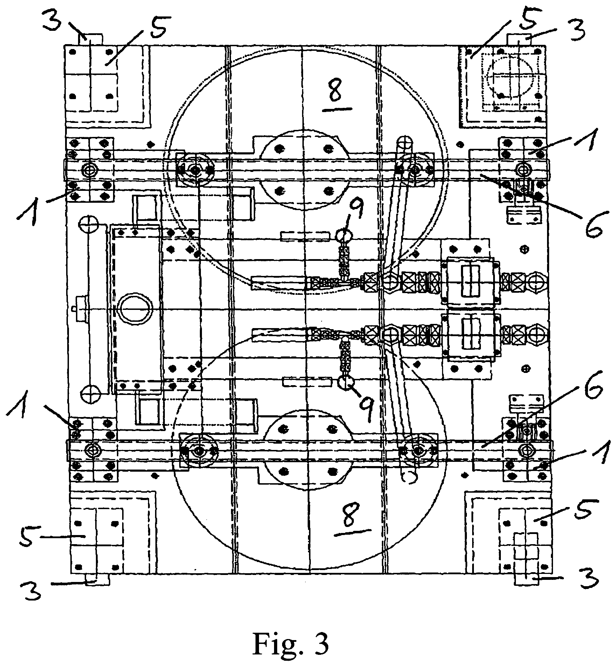

Wie aus den **Figuren 1 bis 3** hervorgeht, besteht die Vorrichtung aus einem Haltegestell 1, welches auf einer Standplatte befestigt ist, wobei der Standort der Vorrichtung über Rollen 3 mit minimalem Kraftaufwand veränderbar ist. Die Standplatte ist so dimensioniert, dass sie zur Aufnahme von zwei Vorlagebehältern 4 zu jeweils 200 Liter Fassungsvolumen geeignet ist. Um diese Vorlagebehälter 4 möglichst einfach auf die Standplatte kippen zu können, sind die Bereiche 5 zur Befestigung der Rollen 3 in Bezug zur Standplatte höhenversetzt angeordnet. Zwischen der Standplatte und den Vorlagebehältern 4 befindet sich je eine Waage 2. An je einem Querbalken 6 des Haltegestells 1 ist eine weitere Haltevorrichtung 7 angeordnet, welche eine Folgeplatte 8 mit einer Ventilöffnung 9 auf die Oberfläche der Vorlageflüssigkeit absinken lässt. Darüber ist eine von einem Gehäuse 10 ummantelte, getaktet geführte Schöpfkolbenpumpe angeordnet. Diese Schöpfkolbenpumpe wird über das Antriebsaggregat 11 mit einem programmgesteuerten Eintauchtakt in die Vorlageflüssigkeit eingetaucht.

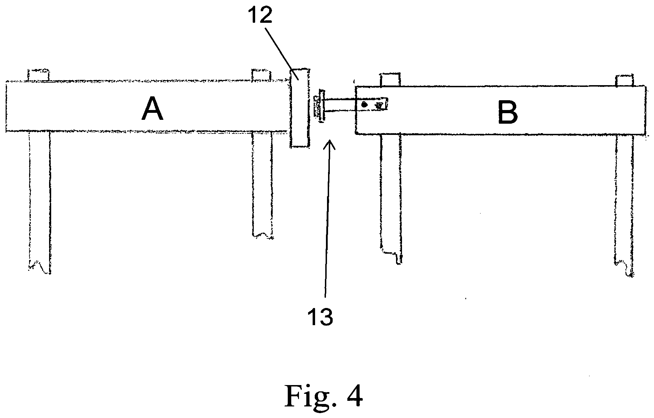

**Fig. 4** zeigt die Aufhängungen A und B der beiden Folgeplatten 8, den Messaufnehmer 12 und einen kontaktlosen Mitnehmer 13, über welche die Differenzposition der beiden Folgeplatten 8 bestimmt wird. An der Aufhängung A ist seitlich ein linearer Messaufnehmer 12 angeordnet. An der gegenüberliegenden Aufhängung B befindet sich seitlich ein mit dem Messaufnehmer 12 korrespondierender, kontaktloser Mitnehmer 13. Über den Mitnehmer 13 und seiner Ausrichtung zum Messaufnehmer 12 ermittelt die hier nicht dargestellte Steuerungseinrichtung die Differenzposition zwischen den beiden Folgeplatten.

Ergänzend wird von den beiden Waagen 2 das aktuelle Gewicht der beiden Vorlagebehälter 4 bestimmt und ihr Differenzwert geht in die Steuerung der Taktung der Schöpfkolbenpumpen ein.

Je nachdem, welche der oben erläuterten Varianten zur Anwendung kommt, gehen die gemessenen Differenzwerte in die Steuerung der Taktfrequenz der Schöpfkolbenpumpen dergestalt ein, dass sich die Differenzwerte mit zunehmender Entleerung der Vorlagebehälter gegen Null hin ausgleichen, wobei die Steuerung eine Abweichung vom idealen Mischungsverhältnis um maximal 5% berücksichtigt. Beide Varianten der Differenzwertermittlung können auch gleichzeitig in die Steuerung eingehen.

In einer bevorzugten Ausführung braucht der lineare Messaufnehmer lediglich einen Messweg von ca. 100 mm ermitteln. Dies entspricht einer Lageabweichung von +/- 50 mm, welche in praktischen Versuchen als ausreichend erkannt wurde.

## Patentansprüche

1. Verfahren für die Steuerung einer Vorrichtung zur Entnahme von flüssigen Materialien aus mindestens zwei Vorlagebehältern und Zuführung dieser Substanzen zu einer Mischeinrichtung, wobei eine Folgeplatte (8) auf der Flüssigkeitsoberfläche aufliegt und das Material aus jeweils einem Vorlagebehälter (4) über eine Schöpfkolbenpumpe, welche von einem Antriebsaggregat angetrieben wird, entnommen und der Mischeinrichtung zugeführt wird, wobei die Menge des entnommenen Materials pro Zeiteinheit über die Taktung der Schöpfkolbenpumpe erfolgt, **dadurch gekennzeichnet, dass** mittels Sensoren, ausgeführt als linearer Messaufnehmer (12), und eines damit korrespondierenden kontaktlosen Mitnehmers (13) die Lagedifferenz der beiden Folgeplatten (8) zueinander laufend ermittelt wird und das Ergebnis der Lagedifferenz an die Steuerung der beiden Schöpfkolbenpumpen weiter geleitet wird und, dass mittels jeweils einer Waage (2) die Gewichte der beiden Vorlagebehälter (4) bestimmt und an die Steuerung der beiden Schöpfkolbenpumpen weiter geleitet wird, wobei die Gewichtsdifferenz der vollen Vorlagebehälter unter Berücksichtigung des bekannten RAM-Druckes, mit dem die Folgeplatten auf die Materialien gepresst werden, gemessen wird, und wobei die Gewichtsdifferenz von der Steuerung für die Ermittlung der Impulsfrequenzen der Schöpfkolbenpumpen berücksichtigt wird, und dass die Steuerung die Taktung der Schöpfkolbenpumpen bis zur nahezu vollständigen Entleerung der Vorlagebehälter so aufeinander abstimmt, dass die gemessene Lage- und Gewichtsdifferenz während der Entleerung der Vorlagebehälter gegen Null ausgeglichen wird.

2. Verfahren nach Anspruch 1, **dadurch gekennzeichnet, dass** die Lagedifferenz der beiden Folgeplatten (8) unmittelbar nach der Entlüftung bestimmt und an die Steuerung der beiden Schöpfkolbenpumpen weitergeleitet wird, worauf die Steuerung die Taktung der Schöpfkolbenpumpen so aufeinander abstimmt, dass die Lagedifferenz während der Entleerung der Vorlagebehälter gegen Null ausgeglichen wird.

3. Verfahren nach Anspruch 1 oder 2, **dadurch gekennzeichnet, dass** die Steuerungseinheit das Volumenverhältnis der aus den Vorlagebehältern entnommenen Komponenten berechnet und die Einhaltung von vorgegebenen Toleranzgrenzen überwacht.

4. Vorrichtung zur Ausführung des Verfahrens nach einem der vorstehenden Ansprüche zur nahezu vollständigen Leerung von flüssiges Material enthaltenden Vorlagebehältern und Zuführung dieser Materialien an eine Mischeinrichtung für Einrichtungen von Spritzgussmaschinen, bestehend aus einem Gestell (1), einer Standplatte für die Aufnahme der Vorlagebehälter (4), einer Haltevorrichtung (7) für Folgeplatten (8) und Schöpfkolbenpumpen (10), welche von Antriebsaggregaten (11) angetrieben werden, **dadurch gekennzeichnet, dass** die Vorrichtung Sensoren, ausgeführt als lineare Messaufnehmer (12), und einen damit korrespondierenden kontaktlosen Mitnehmer (13) besitzt, welche laufend die Lage-Differenzwerte der Lage der Folgeplatten (8) zueinander bestimmen und an eine Rechen- und Steuereinheit weiterleiten und dass zwischen der Standplatte und den Böden der Vorlagebehälter (4) jeweils eine Waage (2) zur Bestimmung des Gewichts des jeweiligen Vorlagebehälters (4) vorgesehen ist und der Gewichts-Differenzwert der Vorlagebehälter (4) an die Rechen- und Steuereinheit weiterleitet wird, und dass die Rechen- und Steuereinheit auf der Basis der gemessenen Lage- und Gewichtsdifferenz, die während der Entleerung der Vorlagebehälter gegen Null ausgeglichen wird, die Taktung der Schöpfkolbenpumpen (10) bis zur nahezu vollständigen Entleerung der Vorlagebehälter (4) steuert.

5. Vorrichtung nach Anspruch 4, **dadurch gekennzeichnet, dass** der lineare Messaufnehmer (12) seitlich an der Führung (A) einer ersten Folgeplatte (8) angeordnet ist und der mit dem Messaufnehmer (12) korrespondierende kontaktlose Mitnehmer (13) an der Führung (B) einer benachbarten zweiten Folgeplatte (8) angeordnet ist.

6. Vorrichtung nach Anspruch 4 oder 5, **dadurch gekennzeichnet, dass** der lineare Messaufnehmer (12) einen Messweg von ca. 100 mm ermittelt.

## Claims

1. A method for controlling an apparatus for removing liquid materials from at least two feed containers and the feeding of said substances to a mixing device, wherein a follower plate (8) rests on the surface of the liquid and the material is removed from one respective feed container (4) via a scoop piston pump, which is driven by a drive unit, and is fed to the mixing device, wherein the quantity of the removed material per unit of time occurs via the timing of the scoop piston pump, **characterized in that** the difference in the position of the two follower plates (8) with respect to each other is determined continuously by means of sensors, formed as linear measuring sensors (12), and a contactless follower (13) that corresponds thereto, and the result of the difference in position is further conducted to the controller of the two scoop piston pumps, and that by means of a respective weighing machine (2) the weights of the two feed containers (4) are determined and are transmitted to the controller of the two scoop piston pumps, wherein the difference in weight of the full feed tank is measured by considering the known RAM pressure with which the follower plates are pressed onto the materials, and wherein the difference in weight is considered by the controller for determining the pulse frequencies of the scoop piston pumps, and that the controller adjusts the timing of the scoop piston pumps until the nearly complete discharging of the feed containers in such a way that the measured difference in position and weight is compensated against zero during the discharging of the feed containers.

2. A method according to claim 1, **characterized in that** the difference in position of the two follower plates (8) is determined directly after venting and is transmitted to the controller of the two scoop piston pumps, whereupon the controller adjusts the timing of the scoop piston pumps to each other in such a way that the difference in position is compensated against zero during the discharging of the feed containers.

3. A method according to claim 1 or 2, **characterized in that** the control unit calculates the volume ratio of the components removed from the feed tanks and monitors the compliance with predetermined tolerance limits.

4. An apparatus for carrying out the method according to one of the preceding claims for the almost complete discharging of feed containers containing liquid material and the feeding of said materials to a mixing device for devices of injection-moulding machines, consisting of a frame (1), a stand plate for accommodating the feed containers (4), a retaining apparatus (7) for the follower plates (8) and scoop piston pumps (10), which are driven by drive units (11), **characterized in that** the apparatus comprises sensors, which are formed as linear measuring sensors (12), and a contactless follower (13) which corresponds thereto, which continuously determine the positional differential values of the position of the follower plates (8) with respect to each other and transmit said values to a computer and control unit, and that a respective weighing machine (2) for determining the weight of the respective feed tank (4) is provided between the stand plate and the bases of the feed tanks (4), and the differential weight value of the feed containers (4) is transmitted to the computer and control unit, and that the computer and control unit, on the basis of the measured difference in position and weight which is compensated against zero during the discharging of the feed tanks, controls the timing of the scoop piston pumps (10) until the almost complete discharging of the feed tanks (4).

5. An apparatus according to claim 4, **characterized in that** the linear measuring sensor (12) is arranged laterally on the guide (A) of a first follower plate (8), and the contactless follower (13) which corresponds to the measuring sensor (12) is arranged on the guide (B) of an adjoining second follower plate (8).

6. An apparatus according to claim 4 or 5, **characterized in that** the linear measuring sensor (12) determines a measuring path of approximately 100 mm.

## Revendications

1. Procédé pour la commande d'un dispositif pour prélever des matières liquides dans au moins deux réservoirs et amener ces substances à une installation de mélange, dans lequel une plaque suiveuse (8) repose à la surface liquide et la matière est prélevée dans chaque réservoir (4) et amenée à l'installation de mélange par une pompe d'épuisement à piston entraînée par un groupe d'entraînement, la quantité de matière prélevée par unité de temps étant déterminée par la cadence de fonctionnement de la pompe d'épuisement à piston, **caractérisé en ce que** la différence de position entre les deux plaques suiveuses (8) est déterminée en continu à l'aide de capteurs réalisés comme des capteurs de mesure linéaires (12) et d'un entraîneur sans contact (13) correspondant et le résultat de différence de position est transmis à la commande des deux pompes d'épuisement à piston, et **en ce que** les poids des deux réservoirs (4) sont déterminés au moyen d'une balance (2) et transmis à la commande des deux pompes d'épuisement à piston, la différence de poids entre les réservoirs pleins étant mesurée en tenant compte de la pression dynamique connue sous laquelle les plaques suiveuses sont pressées sur les matières, et la différence de poids étant prise en compte par la commande pour la détermination des fréquences d'impulsions des pompes d'épuisement à piston, et **en ce que** la commande adapte la cadence de fonctionnement des pompes d'épuisement à piston l'une à l'autre jusqu'à ce que les réservoirs soient presque complètement vidés, de telle façon que les différences de position et de poids soient équilibrées vers zéro pendant le vidage des réservoirs.

2. Procédé selon la revendication 1, **caractérisé en ce que** la différence de position des deux plaques suiveuses (8) est déterminée immédiatement après le vidage et transmise à la commande des deux pompes d'épuisement à piston, après quoi la commande ajuste la cadence de fonctionnement des pompes d'épuisement à piston l'une à l'autre de telle sorte que la différence de position soit équilibrée vers zéro pendant le vidage des réservoirs.

3. Procédé selon la revendication 1 ou 2, **caractérisé en ce que** l'unité de commande calcule le rapport de volume des composantes prélevées dans les réservoirs et surveille le respect des limites de tolérance prescrites.

4. Dispositif pour la mise en oeuvre du procédé selon l'une des revendications précédentes pour vider presque complètement des réservoirs contenant une matière liquide et amener ces matières à une installation de mélange pour des installations de machines de moulage par injection, composé d'un bâti (1), d'une plaque de socle pour recevoir les réservoirs (4), d'un dispositif de maintien (7) pour des plaques suiveuses (8) et des pompes d'épuisement à piston (10) qui sont entraînées par des groupes d'entraînement (11), **caractérisé en ce que** le dispositif possède des capteurs, réalisés comme des capteurs de mesure linéaires (12), et un entraîneur sans contact (13) correspondant, qui déterminent en permanence les valeurs de différence de position entre les plaques suiveuses (8) et les transmettent à une unité de calcul et de commande, et **en ce qu'**une balance (2) est prévue entre la plaque de socle et le fond de chaque réservoir (4) pour déterminer le poids de chaque réservoir et la différence de poids entre les réservoirs (4) est transmise à l'unité de calcul et de commande, et **en ce que** l'unité de calcul et de commande contrôle la cadence de fonctionnement des pompes d'épuisement à piston (10) sur la base des différences de position et de poids mesurées, qui sont équilibrées vers zéro pendant le vidage des réservoirs, jusqu'à ce que les réservoirs (4) soient presque complètement vidés.

5. Dispositif selon la revendication 4, **caractérisé en ce que** le capteur de mesure linéaire (12) est disposé sur le côté du guidage (A) d'une première plaque suiveuse (8) et le capteur de mesure (13) correspondant au capteur de mesure (12) est disposé sur le guidage (B) d'une deuxième plaque suiveuse (8) voisine.

6. Dispositif selon la revendication 4 ou 5, **caractérisé en ce que** le capteur de mesure linéaire (12) détermine une course de mesure d'environ 100 mm.
